# EUROPÄISCHE PATENTANMELDUNG

(11) **EP 1 640 294 A2**
(43) Veröffentlichungstag der Anmeldung: **29.03.2006**
(21) Anmeldenummer: 05107837.6
(22) Anmeldetag: 26.08.2005
(51) Int. Cl.: B65G 1/04, B65G 1/08

(54) **Vorrichtung zum Ein- und Ausschleusen von Ladungsträgern oder Stückgütern**

(30) Priorität: 24.09.2004 DE 102004046439
(71) Anmelder: SIEMENS AKTIENGESELLSCHAFT, 80333 München (DE)
(72) Erfinder: Besch, Axel, 65193 Wiesbaden (DE); Suess, Heiko, 60385 Frankfurt (DE)

(57) **Zusammenfassung**

Vorrichtung zum Ein- und/oder Ausschleusen von Ladungsträgern oder Stückgütern auf oder aus Pufferstrecken, wie Gefällerollenbahnen oder Durchlaufkanäle, mittels einer Übergabevorrichtung zum Aufnehmen jeweils eines Ladungsträgers oder Stückgutes von einer Förderbahn und Abgeben an eine festgelegte Pufferstrecke oder zum Übernehmen eines Ladungsträgers oder Stückgutes von einer Pufferstrecke zur Weiterleitung an einen festgelegten Abgabeplatz. Die Übergabevorrichtung ist als unterhalb der Transportebene der Förderbahn (1,11) bzw. der Pufferstrecke (6) positionierbarer Verfahrwagen (4,12) mit einem darauf angeordneten Übergabeelement (8) ausgebildet und den Verfahrwagen (4,12) ist quer zu den Pufferstrecken (6) in Positionen verfahrbar, in denen er jeweils mit einer der Pufferstrecken (6) korrespondiert.

## Beschreibung

Die Erfindung betrifft eine Vorrichtung zum Ein- und/oder Ausschleusen von Ladungsträgern oder Stückgütern auf oder aus Pufferstrecken, wie Gefällerollenbahnen oder Durchlaufkanäle, mittels einer Übergabevorrichtung zum Aufnehmen jeweils eines Ladungsträgers oder Stückgutes von einer Förderbahn und Abgeben an eine festgelegte Pufferstrecke oder zum Übernehmen eines Ladungsträgers oder Stückgutes von einer Pufferstrecke zur Weiterleitung an einen festgelegten Abgabeplatz.

Das Abziehen bzw. Ausschleusen von Ladungsträgern oder Stückgütern aus angetriebenen oder passiven Pufferstrecken, wie Durchlaufkanäle oder Gefällerollenbahnen, zur Übergabe der dort gepufferten Last auf ein Abzugsband am Ende der Pufferstrecke wird zumeist mit Einrichtungen ausgeführt, von denen jeweils eine jedem Durchlaufkanal oder jeder Gefällerollenbahn zugeordnet sind. Üblich sind beispielsweise Entsperrvorrichtungen ähnlich einer sich öffnenden Schranke oder um Ausschleuseinrichtungen in Form von aktiv angetriebenen, zumindest letzten Rollen der Pufferstrecke. Diese Einrichtungen sind, weil sie jeder Pufferstrecke zugeordnet sein müssen, ein großer Kostenfaktor. Das gleiche gilt für die Einschleusseite der Pufferstrecke, auch dort ist pro Pufferstrecke, also pro Durchlaufkanal oder pro Gefällerollenbahn ein Einschleuselement vorzusehen, das gewöhnlich in Form eines Pushers oder ähnlichem ausgebildet ist. Um das Einschleusen und Ausschleusen der Last zu vereinfachen, sind auch bereits Verfahrwagen vorgeschlagen worden, welche mit Pushern bzw. Riemen ausgestattet sind und die mit den Pufferstrecken korrespondieren.

Zur Vereinfachung der bekannten vorbeschriebenen Vorrichtungen zum Ein- und/oder Ausschleusen von Ladungsträgern oder Stückgütern und insbesondere zur Minimierung der hohen Kosten, die dadurch entstehen, dass jeder einzelnen Pufferstrecke in gleicher Anzahl Elemente zum Abziehen bzw. Ausschleusen der Lasten zugeordnet sein müssen, liegt der vorliegenden Erfindung die Aufgabe zugrunde, eine preisgünstige, einfache und funktionelle Ein- und/oder Ausschleusvorrichtung zu schaffen.

Erfindungsgemäß wird vorgeschlagen, die Ein- und/oder Ausschleusvorrichtung von Ladungsträgern oder Stückgütern mit einer Übergabevorrichtung zum Aufnehmen der Last von der Pufferstrecke bzw. Aufgeben auf die Pufferstrecke so zu gestalten, dass die Übergabevorrichtung als unterhalb der Transportebene der Förderbahn bzw. der Pufferstrecke positionierbarer Verfahrwagen mit einem darauf angeordneten Übergabeelement ausgebildet ist und der Verfahrwagen quer zu den Pufferstrecken in Positionen verfahrbar ist, in denen er jeweils mit einer der Pufferstrecken korrespondiert. Erfindungsgemäß wird nur noch eine wesentlich geringere Anzahl von Übergabevorrichtungen für die Last benötigt, weil die Übergabevorrichtung auf dem Verfahrwagen angeordnet ist und bei Bedarf an den jeweiligen Ort des Ein- und/oder Ausschleusens verfahrbar ist. Je nach Kapazität der Anlage kann es sich um einen einzigen Verfahrwagen oder um eine Mehrzahl von Verfahrwagen handeln, die jeweils mehrere Pufferstrecken bedienen.

Erfindungsgemäß ist das Übergabeelement auf dem Verfahrwagen als Querförderer ausgebildet, dessen Förderrichtung der Transportrichtung der Gefällerollenbahn oder des Durchlaufkanals entspricht.

Nach einem besonders wichtigen Merkmal der Erfindung ist vorgesehen, dass das Übergabeelement mechanisch oder druckmittelbetrieben heb- und senkbar ist. Auf diese Weise kann der Verfahrwagen unterhalb der Transportebene frei bewegt werden, während der Querförderer an der Ein- und/oder Ausschleusposition unterhalb der Last angehoben werden kann, um diese von der Förderbahn abzuheben oder auf diese abzusetzen, wenn der Ein- oder Auslagerungsvorgang erfolgt.

Vorzugsweise ist der Querförderer als Rollenförderer ausgebildet, es ist gleichsam aber auch möglich, den Querförderer als Ketten- oder Riemenförderer sowie auch als Kombination zwischen einem Rollen und einem Riemenförderer auszubilden.

Um zusätzliche Vorrichtungen, wie Pusher oder dgl. einzusparen, ist vorgesehen, dass der Förderer selbst antreibbar ist. Dazu werden die Ketten, Riemen oder Rollen in geeigneter Weise umlaufend angetrieben, sobald der Verfahrwagen mit dem Übergabeelement in der Position gegenüber einer der Pufferstrecken positioniert ist und die Last aufgenommen oder abgegeben werden soll.

Bei der Verwendung von Ketten oder Riemen ist nach einem weiteren Merkmal der Erfindung vorgesehen, dass der angetriebene Querförderer mit mindestens einem an der Kette oder dem Riemen angeordneten Mitnehmer für den Ladungsträger oder das Stückgut versehen ist, der den Ladungsträger oder das Stückgut beim Umlaufen der Kette oder des Riemens in Ausschleusrichtung hintergreift. Denkbar sind Mitnehmerfinger, die sich beim Transport der Last, senkrecht von der Kette oder Riemen abstehend, hinter die in Transportrichtung hintere Kante der Last legt, und diese vorwärts treiben. Gleichzeitig kann der Verfahrwagen mit einem heb- und senkbaren Anschlag für die Last versehen sein, um diese auf dem Zuförderer geeignet anzuhalten, um die Last anschließend mit Hilfe des Mitnehmerfingers auf die Pufferstrecke zu bewegen.

Wenn die Pufferstrecke, wie ein anderes Merkmal der Erfindung vorsieht, als Gefällerollenbahn ausgebildet ist, so ist diese in einem entsprechenden Winkel geneigt angeordnet, der einen zusätzlichen Antrieb der Pufferstrecke entbehrlich macht. Ist die Pufferstrecke als Durchlaufkanal mit in Durchlaufrichtung geneigter Rollenbahn ausgebildet, so gilt auch hier, dass ein zusätzlicher Antrieb grundsätzlich nicht erforderlich ist. Durchlaufkanäle ohne geneigte Rollenbahn sind hingegen mit konventionellen Antrieben ausgestattet.

Um eine zuverlässige Be- und Entladung des Verfahrwagens bzw. des Übergabeelementes von bzw. auf die Pufferstrecke zu erreichen, ist nach einem weiteren Merkmal der Erfindung vorgesehen, dass der Verfahrwagen und/oder das Übergabeelement mindestens teilweise unter die ausschleusseitig angeordneten Rollen der Pufferstrecke greift.

Um eine sichere Übergabe der Last auf die Pufferstrecke bzw. von der Pufferstrecke zu gewährleisten, wird nach einem weiteren Merkmal der Erfindung vorgeschlagen, dass mindestens eine der ausschleusseitig und/oder einschleusseitig angeordneten Rollen der Pufferstrecke antreibbar ist. Das ist besonders dann von Bedeutung, wenn ein Durchlaufkanal mit nicht angetriebenen Rollen Verwendung findet; in diesem Fall gewährleisten die angetriebenen Rollen im Übergabe- bzw. Übernahmebereich den notwendigen Transportantrieb für die Last von dem bzw. auf das Übergabeelement.

Die Antriebe für die ein- bzw. ausschleusseitig angeordneten Rollen der Pufferstrecke können auf dem Verfahrwagen selbst vorgesehen sein und erst dann zum Einsatz gebracht werden, wenn der Verfahrwagen der Pufferstrecke gegenüber steht. Beispielsweise können dazu Reibrollen verwendet werden, die auf dem Verfahrwagen antreibbar gelagert sind und die mit der oder den Rollen der Pufferstrecke oder mit einem stationären Riemen, über den die Rollen antreibbar sind, in Eingriff gebracht werden. Es ist auch denkbar, induktive Antriebe zu verwenden, die von einer auf dem Verfahrwagen vorgesehenen Energiequelle gespeist werden, sobald der Verfahrwagen in der entsprechenden Position angehalten ist.

Bei der Verwendung von Gefällerollenbahnen ist es bedeutsam, dass am ausschleusseitigen Ende der Pufferstrecke ein aktives oder passives Sperrelement zum zeitweisen Zurückhalten des Ladungsträgers oder Stückgutes angeordnet ist. Dieses Sperrelement hält die in Folge der Gravitation zum Ende der Pufferstrecke transportierten Last dort so lange fest, bis ein Verfahrwagen mit Übergabeelement in der Übernahmeposition angelangt ist.

Erfindungsgemäß kann der Ladungsträger oder das Stückgut mit dem heb- und senkbaren Übergabeelement selbst über das passive Sperrelement hinweg gehoben und auf den Verfahrwagen übernommen werden; es ist nach einem anderen Merkmal der Erfindung aber auch denkbar, ein aktives Sperreelement bekannter Bauart zu verwenden, das gemäß der Erfindung von dem heb- oder senkbaren Übergabeelement selbst betätigt wird. Durch letzteres wird sicher gestellt, dass das Sperrelement nur dann und erst dann entfernt wird, wenn das Übergabeelement bzw. der Verfahrwagen in der Übernahmeposition angelangt ist.

Die Verfahrwagen können auf quer zu den Pufferstrecken angeordneten Schienen in einem Regelsystem verfahren werden und mit Abförderbahnen gekoppelt sein. Es ist aber nach einem Merkmal der Erfindung auch denkbar, dass der Verfahrwagen als mindesten in einer der Lagerebenen eines Regallagers frei verfahrbares Satellitenfahrzeug ausgebildet ist, auf dem das Übergabeelement angeordnet ist und das den Ladungsträger oder das Stückgut von der Pufferstrecke übernimmt und zu einer beliebigen Abnahmeposition, ggf. auch außerhalb des Lagersystems transportiert.

Mit den Merkmalen der vorliegenden Erfindung ergeben sich deutliche Kostenvorteile, da ein Verfahrwagen mit Übergabeelement, der eine Vielzahl von Pufferstrecken bedient günstiger ist, als jede einzelne Pufferstrecke mit einer aktiven Abzieh- und/oder Ausschleusvorrichtung auszustatten. Da die Übergabeelemente die Bewegung der Last zwischen Förderer und Pufferstrecke sowie Pufferstrecke und Abgabeplatz exakt steuern, sind Bewegungsfehler durch Verdrehen der Last weitgehend ausgeschaltet. Die Verwendung der heb- und senkbaren Querförderer gestattet die Übergabe auf kostengünstige geteilte Riemenförderer, was als weiterer Vorteil anzusehen ist.

Ein Ausführungsbeispiel der Erfindung ist in der Zeichnung dargestellt und wird nachfolgend beschrieben. Es zeigt:
- Figur 1: eine erfindungsgemäße Vorrichtung in einem Lagersystem mit Pufferstrecken in der Draufsicht,
- Figur 2: eine Seitenansicht des Lagersystems nach Figur 1,
- Figur 3: ein Lagersystem mit Rollenförderer und Riemenübernahme in der Draufsicht,
- Figur 4: das System nach Figur 3 in Seitenansicht,
- Figur 5: den Antrieb einzelner Rollen mittels Reibrad,
- Figur 6: die Ausbildung der Verfahrwagen als Satelitenfahrzeug,
- Figur 7: ein Übergabeelement zum Übergeben einer Last mit Riemenförderer und Mitnehmern und
- Figur 8: ein Übergabeelement zum Übernehmen einer Last mit Riemenförderer und Mitnehmern
In den nachfolgend beschriebenen Zeichnungsfiguren ist die Erfindung grob schematisch vereinfacht dargestellt.

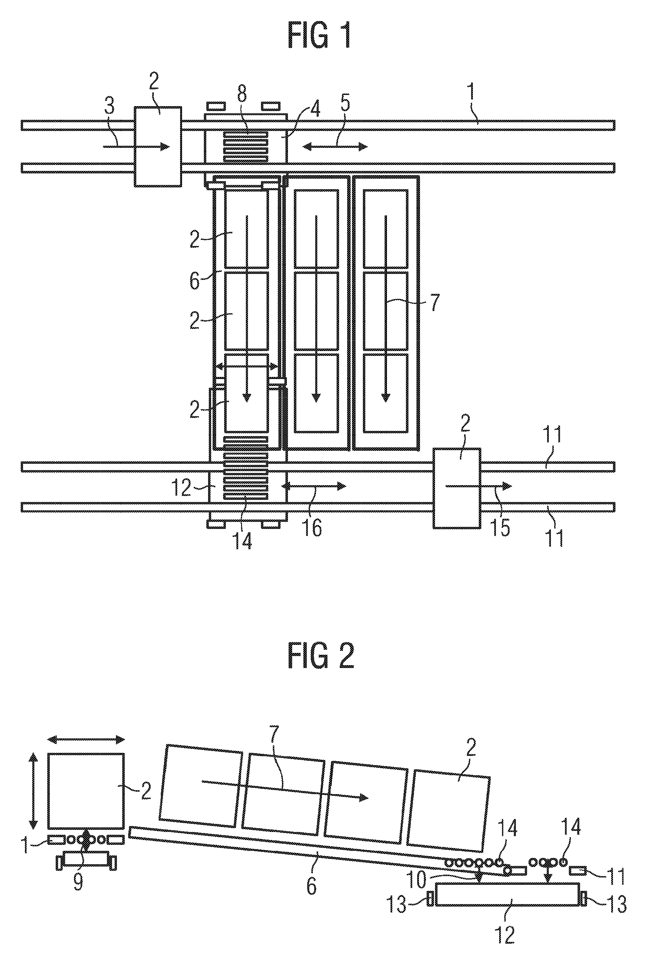

In Figur 1 ist mit 1 ein Zuförderer in Form eines Riemen- oder Kettenförderers bezeichnet, auf dem die Last 2, bei der es sich um einen Stückgutteil selbst oder um einen Lastträger handeln kann, in Transportrichtung 3 herangefördert wird. Unterhalb der Ebene des Zuförderers 1 ist der Verfahrwagen 4 in beiden Transportrichtungen 5 frei verfahrbar angeordnet und wurde in der Darstellung der Figur 1 in einer Position angehalten, in der sich der Verfahrwagen 4 gegenüber einer der Pufferstrecken 6 befindet. Diese Pufferstrecke soll im vorliegenden Beispiel eine Gefällerollenbahn darstellen, auf der bereits mehrere Lasten 2 gepuffert sind. Die Pufferstrecke 6 ist in Pfeilrichtung 7 geneigt, so dass sich die Lasten 2 nach der Übergabe vom Verfahrwagen 4 auf die Pufferstrecke in Folge der Gravitation nach unten bewegen.

Auf dem Verfahrwagen 4 ist das Übergabeelement 8 in Form eines Querförderers angeordnet, der als Rollenförderer ausgebildet ist und, wie in Figur 2 dargestellt in Pfeilrichtung 9 heb- und senkbar ist. Während das Übergabeelement 8 in der Transportposition 5 des Verfahrwagens 4 unterhalb der durch die Riemen oder Ketten gebildeten Transportebene des Zuförderers 1 positioniert ist, so dass der Verfahrwagen 4 auch unterhalb aufliegender Lasten 2 hindurchbewegbar ist, wird das Übergabeelement 8 nach seiner Positionierung gegenüber der Pufferstrecke 6 angehoben, so dass es über die Transportebene der Zuförderstrecke 1 gelangt. In dieser Position bewirken die Rollen des Übergabeelementes 8, die im vorliegenden Beispiel angetrieben sind, einen Transport der Last 2 in Richtung Pufferstrecke 6 und eine Übergabe der Last 2 auf dieselbe. Die Last 2 bewegt sich auf der Gefällerollenbahn der Pufferstrecke 6 in Pfeilrichtung 7 soweit nach unten, bis sie durch ein Sperrelement aufgehalten wird, welches am unteren Ende der Pufferstrecke vorgesehen ist. Das Sperrelement kann gehoben und gesenkt werden, um eine Last zur Übergabe auf einen weiteren Verfahrwagen mit Übergabeelement freizugeben oder festzuhalten. Dieser Verfahrwagen ist unterhalb des am ausschleusseitigen Ende der Pufferbahn 6 vorgesehenen Riemen- oder Kettenförderers 11 ebenso verfahrbar, wie der Wagen 4 unterhalb des Zuförderers 1 am oberen Ende der Pufferstrecke. Der insgesamt mit 12 bezeichnete Verfahrwagen, der auf Rädern 13 auf nicht dargestellten Schienen (senkrecht zur Zeichnungsebene) verfahrbar ist, trägt ein erfindungsgemäßes Übergabeelement in Form des Querförderers 14, der ebenfalls aus einer Position unterhalb der Transportebene des Förderers 11 in eine Position oberhalb dieser Ebne heb- und senkbar ist, wobei in letzterer Position die von Rollenfördererabschnitt 10 angehobene Last 2 auf den Querförderer 14 übergeben werden kann. Zur Unterstützung können mindestens die letzten Rollen der Pufferstrecke 6 angetrieben werden, um eine störungsfreie Übergabe der Last 2 auf den Querförderer 14 zu gewährleisten. Durch Absenken des Querförderers 14 wird die dort aufliegende Last 2 ebenfalls abgesenkt und auf die Transportriemen bzw. Ketten des Förderers 11 übergeben und in Pfeilrichtung 15 (Figur 1) abtransportiert.

Die Verfahrwagen 4 bzw. 12 sind in Pfeilrichtung 5 bzw. 16 in die vorherbestimmte Position verfahrbar, wo die Last 2 an die Pufferstrecke übergeben bzw. von der Pufferstrecke übernommen werden soll. Dabei kann jeder der beiden Verfahrwagen in der abgesenkten Position ihrer Übergabeelemente 8 bzw. 14 auch unter einer auf den Zuförderer 1 bzw. dem Abförderer 11 aufliegenden Last 2 hindurchgefahren werden, um dadurch schnell und flexibel in die geforderte Übernahme- bzw. Übergabeposition zu gelangen.

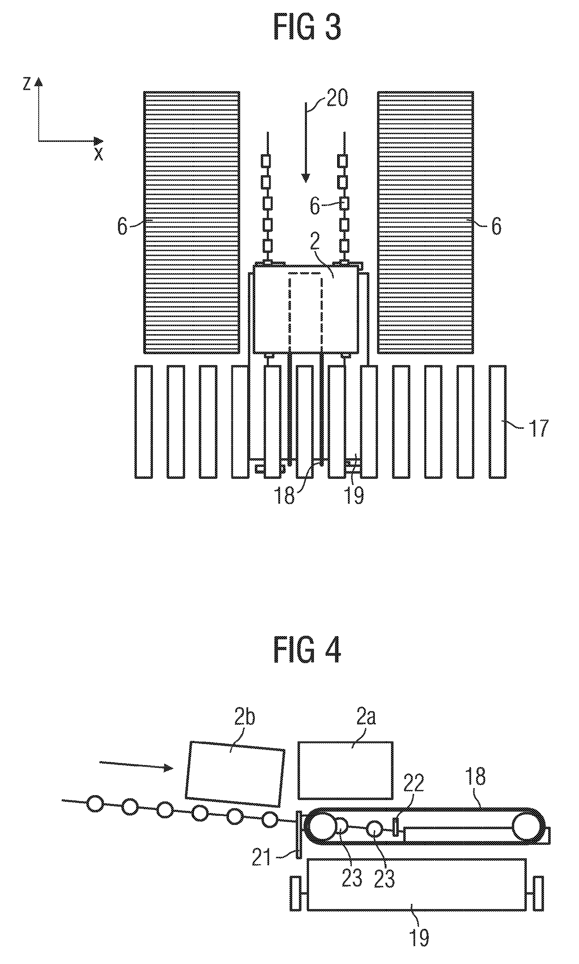

In Figur 3 ist eine andere Vorrichtung nach der Erfindung dargestellt, wobei hier nur das Übergabeelement 8 am Ende der Pufferstrecke 6 gezeigt ist. Bei dem Abförderer 17 handelt es sich um einen Rollenförderer, während der Querförderer der Übergabevorrichtung 8 auf dem Verfahrwagen 19 als Riemenförderer ausgebildet ist. Die Pufferstrecken 6 sind, wie bei der mittleren Pufferstrecke symbolisiert, als nicht angetriebene Rollenbahnen ausgebildet, auf denen die Last 2 in Folge der Gravitation in Pfeilrichtung 20 transportiert wird.

Wie in Figur 4, der Seitenansicht der Darstellung in Figur 3, erkennbar, sind zwei Sperrelemente 21, 22 vorgesehen, die der ordnungsgemäßen Übergabe der Last 2 dienen. Solange kein Verfahrwagen in der Übernahmeposition positioniert ist, wird die Last 2b durch das Sperrelement 22 zurückgehalten. Der Verfahrwagen unterfährt in der Übernahmeposition die letzten Rollen der Pufferstrecke 6, in dieser Position wird der Querförderer, der hier als Riemenförderer mit Riemen 18 ausgebildet ist, in die dargestellte obere Stellung angehoben. Gleichzeitig wird die Last 2b auf den Rollen der Pufferstrecke 6 durch das Sperrelement 21 zurückgehalten, so dass der Querförderer 14 in die dargestellte Position angehoben werden kann, in der der tragende Teil des Riemens 18 des Riemenförderers oberhalb des Sperrelements 22 positioniert ist.

Wird dieser Riemen 18 nun angetrieben (hier nicht dargestellt), so wird die Last 2a über das Sperrelement 22 hinweg in eine Position oberhalb der Rollen des Rollenförderers 17 transportiert und durch Absenken des Querförderers 14 auf diesen abgesetzt. Der Verfahrwagen 19 ist nun bereit für ein weiteres Übergabe/Übernahmespiel und kann in die gewünschte Position gegenüber einer anderen Pufferstrecke 6 verfahren werden.

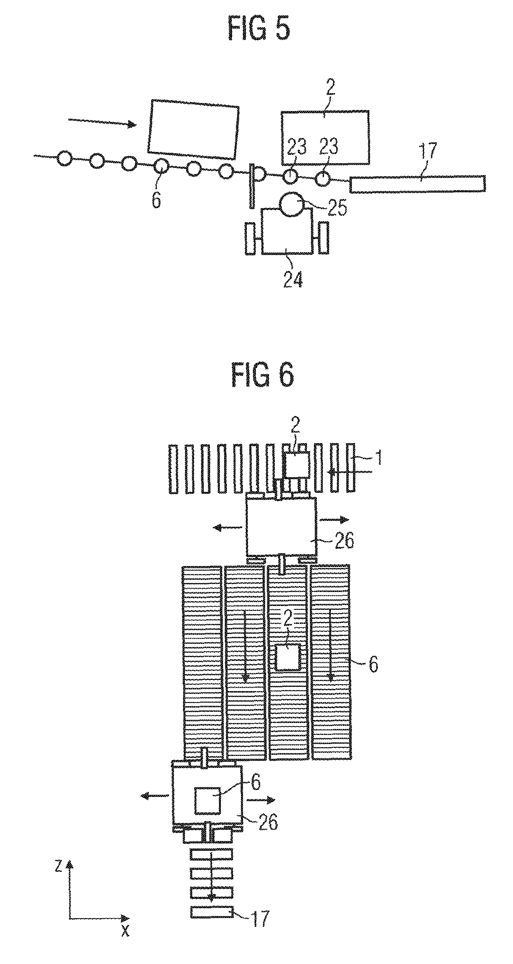

In Figur 5 ist schematisch gezeigt, wie der nach einem Merkmal der Erfindung vorgesehene Antrieb der letzten Rollen der Pufferstrecke 6 zur Übergabe der Last 2 erfolgen kann. Zu diesem Zweck ist auf dem Wagen 24 ein Reibradantrieb 25 vorgesehen, der durch Anheben mit mindesten einer der Rollen des Förderers in Kontakt gebracht werden kann. Die angetriebenen Rollen 23 transportieren die Last auf den Rollenförderer 17.

In Figur 6 ist in einer Draufsicht auf ein Lagersystem schematisch dargestellt, dass der Verfahrwagen als Satelitenfahrzeug (Shuttle) 26 ausgebildet sein kann, wobei auch hier die Übergabeelemente auf diesem Shuttlefahrzeug mitgeführt werden und in den Bereich des Zu- bzw. Abförderers zur Aufnahme bzw. Abgabe der Last eingreifen können. Die Shuttlefahrzeuge 26 können frei im Lagersystem verfahren, und ggf. auch aus diesem heraus zu festgelegten Übergabepositionen verfahren werden.

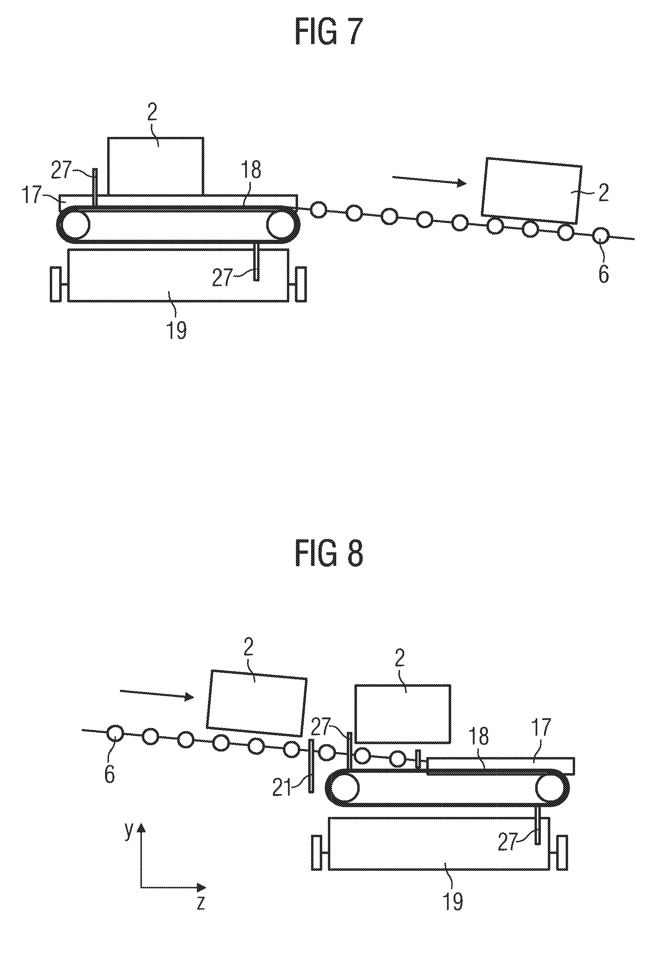

Figur 7 zeigt eine Lösung, bei der das Übergabeelement 8 als Riemenförderer ausgebildet ist, dessen heb- und senkbare Riemen 18 durch die Rollen 17 des als Rollenförderer ausgebildeten Zuförderers 1 greifen, um die Last 2 zu übernehmen. Um die Last 2 von dem Übergabeelement 8 auf die Pufferstrecke 6 zu überführen, sind an dem Riemen 18 des Riemenförderers zwei Mitnehmer 21 senkrecht abstehend befestigt, die hinter die Last 2 greifen und diese in Umlaufrichtung des Riemenförderers in Richtung Pufferstrecke 6 transportieren.

Figur 8 zeigt einen gleichartigen Riemenförderer als Übergabeelement 8 auf einem Verfahrwagen 19 am anderen Ende der Pufferstrecke 6. Auch hier wird ein mit den Riemen 18 die Rollen 17 des Abförderers 11 durchgreifender Riemenförderer verwendet, der mit einem der beiden am Riemen 18 angeordneten Mitnehmern 21 die Last 2 hintergreift und von der Pufferstrecke 6 auf den Verfahrwagen 19 überführt, wo sie nach Absenken auf die Rollen 17 des Abförderers 11 wegtransportiert werden kann.

## Patentansprüche

1. Vorrichtung zum Ein- und/oder Ausschleusen von Ladungsträgern oder Stückgütern (2) auf oder aus Pufferstrecken (6), wie Gefällerollenbahnen oder Durchlaufkanäle, mittels einer Übergabevorrichtung zum Aufnehmen jeweils eines Ladungsträgers oder Stückgutes (2) von einer Förderbahn (1) und Abgeben an eine festgelegte Pufferstrecke (6) oder zum Übernehmen eines Ladungsträgers oder Stückgutes (2) von einer Pufferstrecke (6) zur Weiterleitung an einen festgelegten Abgabeplatz,
**dadurch gekennzeichnet, dass**
die Übergabevorrichtung als unterhalb der Transportebene der Förderbahn (1, 11) bzw. der Pufferstrecke (6) positionierbarer Verfahrwagen (4, 12) mit einem darauf angeordneten Übergabeelement (8) ausgebildet ist und der Verfahrwagen (4, 12) quer zu den Pufferstrecken (6) in Positionen verfahrbar ist, in denen er jeweils mit einer der Pufferstrecken (6) korrespondiert.

2. Vorrichtung nach Anspruch 1,
**dadurch gekennzeichnet**, das
Übergabeelement (8) als Querförderer ausgebildet ist.

3. Vorrichtung nach Anspruch 1 und 2,
**dadurch gekennzeichnet, dass**
das Übergabeelement (8) mechanisch oder druckmittelbetrieben heb- und senkbar ist.

4. Vorrichtung nach einem der Ansprüche 1 bis 3,
**dadurch gekennzeichnet, dass**
das Übergabeelement (8) als Rollenförderer ausgebildet ist.

5. Vorrichtung nach einem der Ansprüche 1 bis 3,
**dadurch gekennzeichnet, dass**
das Übergabeelement (8) als Ketten- oder Riemenförderer ausgebildet ist.

6. Vorrichtung nach einem der Ansprüche 1 bis 3,
**dadurch gekennzeichnet, dass**
das Übergabeelement (8) als kombinierter Rollen- und Riemenförderer ausgebildet ist.

7. Vorrichtung nach einem der Ansprüche 1 bis 6,
**dadurch gekennzeichnet, dass** das Übergabeelement (8) antreibbar ist.

8. Vorrichtung nach Anspruch 5 oder 6,
**dadurch gekennzeichnet, dass**
das Übergabeelement (8) mit mindestens einem an des Kette oder dem Riemen (18) angeordneten Mitnehmer (21) für den Ladungsträger oder das Stückgut (2) versehen ist, der den Ladungsträger oder das Stückgut (2) beim Umlaufen der Kette oder des Riemens (18) in Ausschleusrichtung hintergreift.

9. Vorrichtung nach einem der Ansprüche 1 bis 8,
**dadurch gekennzeichnet, dass**
die Pufferstrecke (6) als Gefällerollenbahn ausgebildet ist.

10. Vorrichtung nach einem der Ansprüche 1 bis 8,
**dadurch gekennzeichnet, dass**
die Pufferstrecke (6) ein Durchlaufkanal mit in Durchlaufrichtung geneigter (7) Rollenbahn ist.

11. Vorrichtung nach einem der Ansprüche 1 bis 10,
**dadurch gekennzeichnet, dass**
der Verfahrwagen (4, 19) und/oder das Übergabeelement mindestens teilweise unter die ausschleusseitig angeordneten Rollen (23) der Pufferstrecke (6) greift.

12. Vorrichtung nach einem der Ansprüche 1 bis 11,
**dadurch gekennzeichnet, dass**
mindestens eine der ausschleusseitig angeordneten Rollen (23) der Pufferstrecke (6) in Richtung des Verfahrwagens (4, 19) antreibbar ist.

13. Vorrichtung nach Anspruch 12,
**dadurch gekennzeichnet, dass**
zum Antrieb der mindestens einen ausschleusseitig angeordneten Rolle (23) der Pufferstrecke (6) ein Reibradantrieb (25) vorgesehen ist, der auf dem Verfahrwagen (24) vorgesehen ist und mit stationären Antrieben der Rollen verbindbar ist.

14. Vorrichtung nach einem der Ansprüche 1 bis 13,
**dadurch gekennzeichnet, dass**
am ausschleusseitigen Ende der Pufferstrecke (6) eine aktives oder passives Sperrelement (21, 22) zum zeitweisen Zurückhalten des Ladungsträgers oder Stückgutes (2) angeordnet ist.

15. Vorrichtung nach den Ansprüchen 3 und 14,
**dadurch gekennzeichnet, dass** der Ladungsträger oder das Stückgut (2) mit dem heb- und senkbaren Übergabeelement (8) über das passive Sperrelement (22) hinweghebbar ist.

16. Vorrichtung nach den Ansprüchen 3 und 14,
**dadurch gekennzeichnet, dass**
das aktive Sperrelement (21 oder 22) von dem heb- und senkbaren Übergabeelementes (8) betätigbar ist.

17. Vorrichtung nach einem der Ansprüche 1 bis 14,
**dadurch gekennzeichnet, dass**
der Verfahrwagen als mindestens in einer der Lagerebenen einer Regallagers frei verfahrbares Shuttlefahrzeug (26) ausgebildet ist, auf dem das Übergabeelement (8) angeordnet ist, das den Ladungsträgers oder das Stückgut (2) von der Pufferstrecke (6) übernimmt.
